# EUROPÄISCHE PATENTANMELDUNG

(11) **EP 1 397 979 A1**
(43) Veröffentlichungstag der Anmeldung: **17.03.2004**
(21) Anmeldenummer: 03020754.2
(22) Anmeldetag: 12.09.2003
(51) Int. Cl.: A47B 81/06, G11B 33/04

(54) **Regal, Unterteilung und Aufnahmeelement für ein Regal**

(30) Priorität: 19.02.2003 DE 20302682 U; 13.09.2002 DE 20214233 U
(71) Anmelder: Münch, Helmut, 96179 Rattelsdorf (DE)
(72) Erfinder: Münch, Helmut, 96179 Rattelsdorf (DE)
(74) Vertreter: Kinnstätter, Klaus

(57) **Zusammenfassung**

Ein Regal weist eine Aufnahmestruktur (1, 2) auf, die in einer Erstreckungsrichtung (x) beidseitig mit Abschlusselementen (3) abgeschlossen ist. Ein so gebildeter Aufnahmebereich (4) ist aus einer Zugangsrichtung (y) zugänglich. Die Aufnahmestruktur (1, 2) weist Aufnahmen (5) auf, in die aus der Zugangsrichtung (y) Unterteilungen (6) einsteckbar sind, die das Regal in in Erstreckungsrichtung (x) übereinander angeordnete Fächer (7) unterteilen. Die Aufnahmen (1, 2) sind in Erstreckungsrichtung (x) in einem Rastermaß (R) zwischen 5 und 10 mm angeordnet. Die Fächer (7) weisen in Zugangsrichtung (y) eine Fachtiefe (t) zwischen 13,5 und 20 cm und in einer Fachhöhenrichtung (z) eine Fachhöhe (h) zwischen 13,5 und 35 cm auf.

## Beschreibung

Die vorliegende Erfindung betrifft ein Regal mit einer Aufnahmestruktur und zwei Abschlusselementen,
- wobei die Aufnahmestruktur in einer Erstreckungsrichtung gesehen beidseitig mit den Abschlusselementen abgeschlossen ist, so dass die Aufnahmestruktur und die Abschlusselemente einen Aufnahmebereich bilden, der aus einer Zugangsrichtung zugänglich ist, die quer zur Erstreckungsrichtung verläuft,
- wobei die Aufnahmestruktur Aufnahmen aufweist, in die aus der Zugangsrichtung Unterteilungen einsteckbar sind, so dass die Unterteilungen das Regal in Fächer unterteilen, die in Erstreckungsrichtung gesehen übereinander angeordnet sind.

Die vorliegende Erfindung betrifft ferner eine Unterteilung für ein derartiges Regal sowie eine Aufnahme für ein derartiges Regal.

Regale sind allgemein bekannt. Sie sind für die Aufnahme und Aufbewahrung von Gebrauchsgütern aller Art bestimmt.

Seit Jahren werden scheiben- und quaderförmige Konsumgüter, wie beispielsweise CDs, Videokassetten, DVDs usw., vertrieben. Sowohl im Vertrieb an den Endkunden als auch für die Aufbewahrung beim Endverbraucher sind hierfür Aufnahmen erforderlich.

Die Aufgabe der vorliegenden Erfindung besteht darin, ein Regal zu schaffen, in dem unabhängig von der Dicke der aufzubewahrenden Güter eine platzsparende vereinzelte Aufbewahrung möglich ist.

Die Aufgabe wird dadurch gelöst,
- dass die Aufnahmen in Erstreckungsrichtung gesehen in einem Rastermaß angeordnet sind, das zwischen 5 und 10 mm, insbesondere zwischen 6 und 8 mm, liegt,
- dass die Fächer in Zugangsrichtung eine Fachtiefe aufweisen, die zwischen 13,5 und 20 cm, insbesondere zwischen 14 und 15 cm, liegt,
- dass die Fächer in einer Fachhöhenrichtung, die sowohl quer zur Erstreckungsrichtung als auch quer zur Zugangsrichtung verläuft, eine Fachhöhe aufweisen, die zwischen 13,5 und 35 cm, insbesondere zwischen 13,5 und 15 cm oder zwischen 30 und 35 cm, liegt.

Wenn die Aufnahmestruktur zwei äußere Aufnahmeelemente und ein inneres Aufnahmeelement aufweist und die äußeren Aufnahmeelemente mit dem inneren Aufnahmeelement bezüglich eines Mittelpunkts einer Verbindungslinie der beiden äußeren Aufnahmeelemente miteinander je einen Winkel bilden, der zwischen 80 und 100° liegt, ergibt sich eine stabile Halterung der Unterteilungen in der Aufnahmestruktur.

Wenn das Regal zwischen den Aufnahmeelementen offen ist, ergibt sich ein optisch ansprechendes Aussehen des Regals bei einer gleichzeitigen Minimierung des Materialbedarfs.

Es hat sich als vorteilhaft erwiesen, wenn die Aufnahmeelemente eine Breite aufweisen, die zwischen 40 und 80 mm, insbesondere zwischen 45 und 60 mm, liegt.

Die Aufnahmeelemente können aus Holz, Metall (insbesondere Stahl) oder Kunststoff bestehen. Bestehen sie aus Metall, weisen sie vorzugsweise einen U-förmigen Querschnitt auf und sind Stanzbiegeteile. Bestehen sie aus Holz oder Kunststoff, sind die Aufnahmen vorzugsweise als Nuten ausgebildet. Die Nuten weisen dabei vorzugsweise einen geraden Verlauf auf.

Wenn die Aufnahmen in Erstreckungsrichtung gesehen eine Aufnahmehöhe aufweisen, die zwischen 40 und 60 %, insbesondere zwischen 45 und 55 %, des Rastermaßes liegt, sind die Aufnahmestruktur und die Unterteilungen besonders hoch belastbar.

Wenn die Unterteilungen in der Aufnahmestruktur verspannt gehalten sind, werden sie quasi unverlierbar in der Aufnahmestruktur gehalten. Insbesondere ist ein allmähliches Herausrutschen der Unterteilungen aus den Aufnahmen ohne gezielte äußere Einwirkung nicht möglich.

Wenn die Aufnahmestruktur mit den Abschlusselementen lösbar verbunden, insbesondere gedübelt oder verschraubt ist, ist das Regal zu Transportzwecken demontierbar. Insbesondere kann es auch in Form eines entsprechenden Bausatzes verkauft werden.

Wenn das Regal in Erstreckungsrichtung gesehen eine Länge über alles aufweist, die kleiner als 50 cm ist, insbesondere entweder zwischen 45,5 und 47,5 cm oder zwischen 49 und 49,8 cm liegt, ist das Regal in übliche Schränke einbaubar.

Es hat sich als vorteilhaft erwiesen, wenn das Regal in Zugangsrichtung eine Tiefe über alles aufweist, die gleich einem Drittel der Länge über alles ist.

Wenn das Regal in Fachhöhenrichtung eine Höhe über alles aufweist, die gleich einem Drittel oder zwei Drittel der Länge über alles ist, sind modulartige Kombinationsaufbauten einfach realisierbar.

Die Unterteilung weist vorzugsweise folgenden Aufbau auf:
- das Außenteil und das Innenteil sind in einer gemeinsamen Ebene angeordnet,
- das Außenteil übergreift das Innenteil,
- das Außenteil ist C-förmig ausgebildet, so dass es im wesentlichen ein Mittelelement, zwei Zwischenelemente und zwei Randelemente aufweist,
- zwischen den Zwischenelementen und dem Mittelelement sowie zwischen den Zwischenelementen und den Randelementen verlaufen abgerundete Eckbereiche,
- das Innenteil ist U-förmig ausgebildet, so dass es im wesentlichen ein Innenelement und zwei Außenelemente aufweist,
- zwischen dem Innenelement und den Außenelementen verlaufen ebenfalls abgerundete Eckbereiche,
- die Randelemente des Außenteils sind mit den Außenelementen des Innenteils über abgerundete Eckbereiche verbunden.

Denn in diesem Fall ist die Unterteilung einfach aufgebaut und dennoch robust, stabil und gut handhabbar. Vorzugsweise ist sie dabei symmetrisch ausgebildet.

Wenn das Innenelement von den Randelementen weiter beabstandet ist als vom Mittelelement ergibt sich eine besonders stabile Halterung in den Aufnahmen.

Wenn die Außenelemente von den ihnen am nächsten liegenden Randelementen weiter beabstandet sind als voneinander, ist die Halterung noch stabiler.

Vorzugsweise besteht die Unterteilung aus Stahl-Runddraht. Sie kann in diesem Fall insbesondere als einstückiges Drahtstück ausgebildet sein, dessen Stöße miteinander verschweißt sind. Die Stöße sind in diesem Fall vorzugsweise entweder in der Mitte des Mittelelements oder in der Mitte des Innenelements angeordnet.

Das Aufnahmeelement weist vorzugsweise folgenden Aufbau auf:
- Es besteht aus Metall, insbesondere aus Stahl, ist als Stanzbiegeteil ausgebildet und erstreckt sich in einer Erstreckungsrichtung,
- im Querschnitt zur Erstreckungsrichtung weist es einen Mittelbereich und zwei Außenbereiche auf,
- die Außenbereiche sind relativ zum Mittelbereich im Wesentlichen rechtwinkelig umgebogen, so dass das Aufnahmeelement im Querschnitt U-förmig ausgebildet ist,
- die Außenbereiche sind um eine Elementbreite voneinander beabstandet, die zwischen 40 und 80 mm, insbesondere zwischen 45 und 60 mm, z. B. bei 50 mm, liegt,
- die Außenbereiche weisen an ihren vom Mittelbereich beabstandeten Enden Aufnahmen auf, die in Erstreckungsrichtung gesehen in einem Rastermaß angeordnet sind, das zwischen 5 und 10 mm, insbesondere zwischen 6 und 8 mm, z. B. bei 7 mm, liegt,
- die Aufnahmen weisen eine Aufnahmenweite auf, die zwischen 40 und 60 %, insbesondere zwischen 45 und 55 %, z. B. bei 50 %, des Rastermaßes liegt.

Vorzugsweise erstreckt sich das Ausnahmeelement quer zur Elementbreite und quer zur Erstreckungsrichtung über eine Elementhöhe, die zwischen 10 und 30 mm, insbesondere zwischen 15 und 25 mm, z. B. bei 18 mm, liegt.

Wenn die Aufnahmen quer zur Elementbreite und quer zur Erstreckungsrichtung eine Aufnahmetiefe aufweisen, die zwischen 75 und 140 %, insbesondere zwischen 80 und 120 %, z. B. bei 100 %, der Aufnahmeweite liegt, ergibt sich eine besonders stabile Konstruktion.

Wenn das Aufnahmeelement sich in Erstreckungsrichtung über eine Elementlänge erstreckt, die zwischen 40 und 49,5 cm liegt, ist es besonders einfach in Wandschränke und dergleichen einbaubar.

Weitere Vorteile und Einzelheiten ergeben sich aus der nachfolgenden Beschreibung eines Ausführungsbeispiels in Verbindung mit den Zeichnungen. Dabei zeigen in Prinzipdarstellung
- Figur 1 und 2: ein Regal in der Ansicht von vorne bzw. von der Seite,
- Figur 3: das Regal der Figuren 1 und 2 im Querschnitt längs einer Linie III-III,
- Figur 4: ein Aufnahmeelement von der Seite,
- Figur 5: das Aufnahmeelement von Figur 4 im Querschnitt längs einer Linie V-V,
- Figur 6: einen Querschnitt durch ein weiteres Aufnahmeelement,
- Figur 7: eine Unterteilung in der Draufsicht,
- Figur 8: die Unterteilung von FIG 7 in der Seitenansicht,
- Figur 9: ein weiteres Regal im Querschnitt und
- Figur 10: eine weitere Unterteilung.

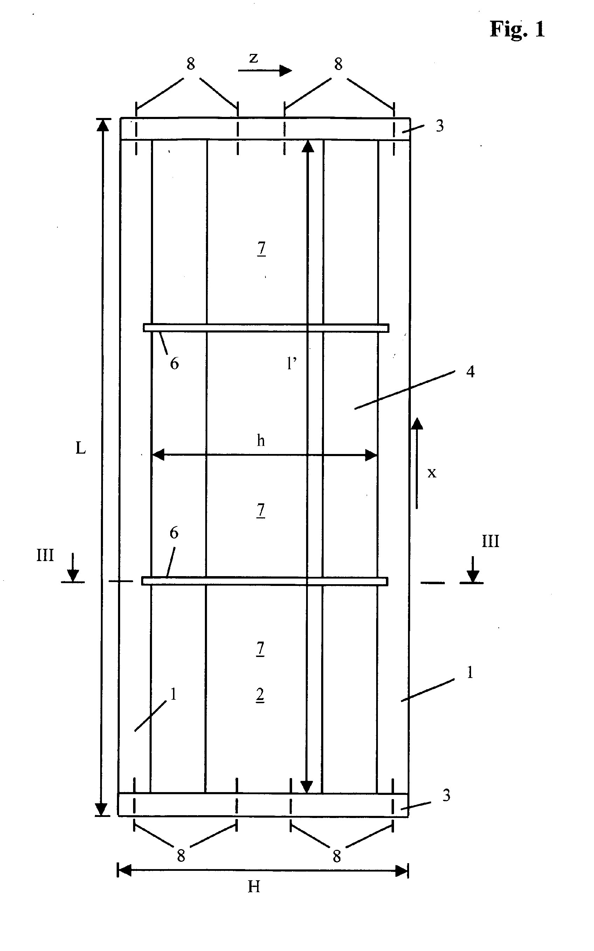

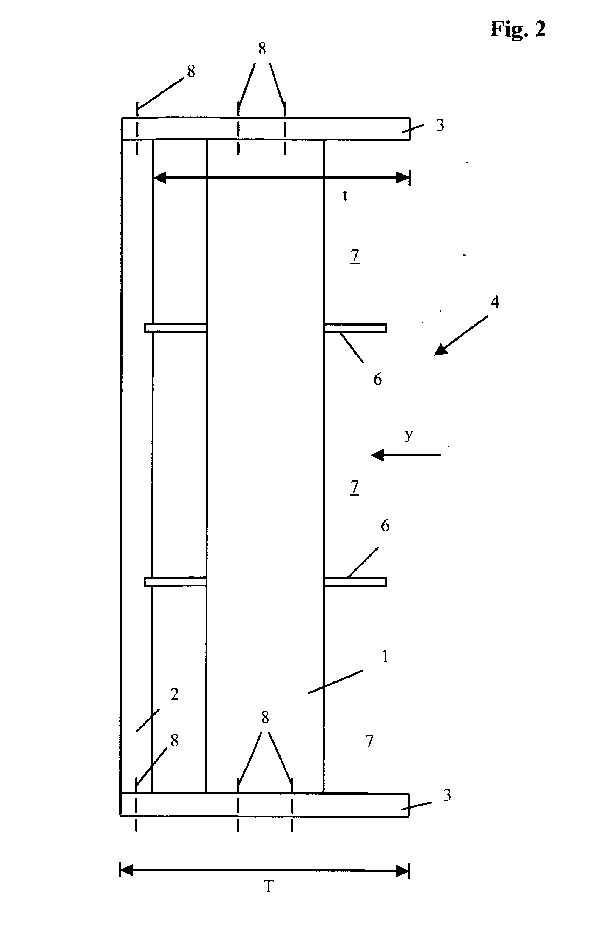

Gemäß den Figuren 1 bis 3 weist ein Regal zwei äußere Aufnahmeelemente 1 und ein inneres Aufnahmeelement 2 auf. Die Aufnahmeelemente 1, 2 erstrecken sich in einer Erstreckungsrichtung x.

Die Aufnahmeelemente 1, 2 bilden eine Aufnahmestruktur, die in Erstreckungsrichtung x gesehen beidseitig mit Abschlusselementen 3 abgeschlossen ist. Zwischen den Aufnahmeelementen 1, 2 ist das Regal offen. Die Aufnahmeelemente 1, 2 und die Abschlusselemente 3 bilden somit einen Aufnahmebereich 4, der aus einer Zugangsrichtung y zugänglich ist. Die Zugangsrichtung y verläuft dabei ersichtlich quer zur Erstreckungsrichtung x.

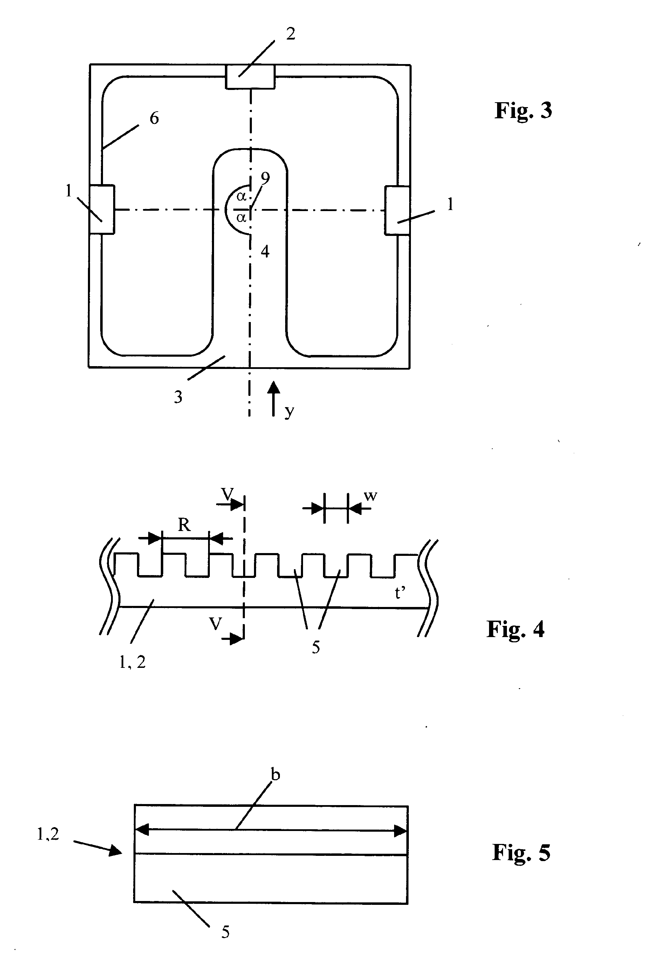

Die Aufnahmeelemente 1, 2 weisen - siehe Figur 4 - Aufnahmen 5 auf, in die aus der Zugangsrichtung y je eine Unterteilung 6 einsteckbar ist. Die Unterteilungen 6 unterteilen das Regal in Fächer 7, die in Erstreckungsrichtung x gesehen übereinander angeordnet sind.

In Zugangsrichtung y gesehen weisen die Fächer 7 eine Fachtiefe t auf., die zwischen 13,5 und 20 cm liegt. Vorzugsweise liegt sie zwischen 14 und 15 cm. In einer Fachhöhenrichtung z, die sowohl quer zur Erstreckungsrichtung x als auch quer zur Zugangsrichtung y verläuft, weisen sie eine Fachhöhe h auf. Die Fachhöhe h liegt ebenfalls zwischen 13,5 und 15 cm. Insbesondere ist die Fachhöhe h vorzugsweise genauso groß wie die Fachtiefe t.

Das Regal weist Maße L, T, H über alles auf. Insbesondere weist es in Erstreckungsrichtung x eine Länge L über alles, in Zugangsrichtung y eine Tiefe T über alles und in Fachhöhenrichtung z eine Höhe H über alles auf. Die Länge L über alles ist kleiner als 50 cm. Vorzugsweise liegt sie zwischen 45,5 und 47,5 cm. Alternativ kann sie auch zwischen 49 und 49,8 cm liegen. Die Tiefe T über alles ist vorzugsweise gleich einem Drittel der Länge L über alles. Die Höhe H über alles ist gemäß Figur 1 ebenso groß wie die Tiefe T über alles, beträgt also ebenfalls ein Drittel der Länge L über alles.

Die Abschlusselemente 3 sind mit den Aufnahmeelementen 1, 2 über schematisch angedeutete Verbindungen 8 verbunden, z. B. verschraubt. Alternativ können sie auch gedübelt, genietet, geklebt oder anders, insbesondere nach Bedarf unlösbar oder lösbar, verbunden sein. Die Länge 1 der Aufnahmeelemente 1, 2 liegt - angepasst an die Länge L über alles - vorzugsweise zwischen 40 und 49,5 cm.

Wie besonders deutlich aus Figur 3 ersichtlich ist, bilden die äußeren Aufnahmeelemente 1 mit dem inneren Aufnahmeelement 2 bezüglich eines Mittelpunkts 9 einer Verbindungslinie der beiden äußeren Aufnahmeelemente 1 miteinander je einen Winkel α. Der Winkel α liegt vorzugsweise zwischen 80 und 100°. Insbesondere kann er exakt 90° sein.

Gemäß Figur 4 sind die Aufnahmen 5 in Erstreckungsrichtung x gesehen in einem Rastermaß R angeordnet. Das Rastermaß R liegt zwischen 5 und 10 mm, insbesondere zwischen 6 und 8 mm. Gemäß Ausführungsbeispiel liegt es bei 7 mm.

Die Aufnahmeelemente 1, 2 sind untereinander gleich ausgebildet. Sie können wahlweise aus Holz, Metall oder Kunststoff bestehen.

Wenn die Aufnahmeelemente 1, 2 aus Holz oder Kunststoff bestehen, sind die Aufnahmen 5 gemäß Figur 5 vorzugsweise als Nuten 5 ausgebildet. Die Nuten 5 weisen in diesem Fall vorzugsweise einen geraden Verlauf auf.

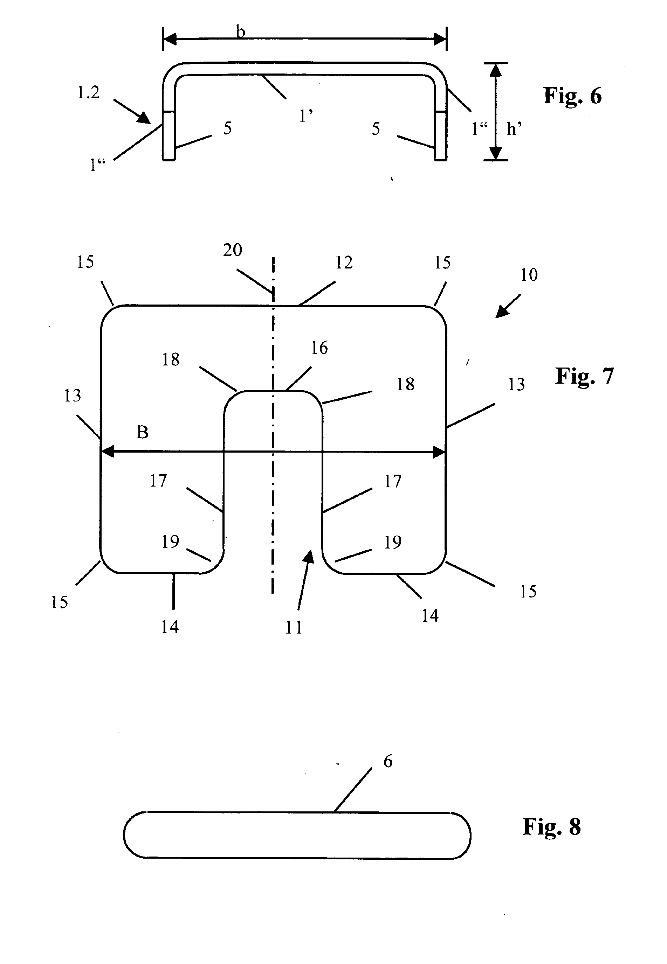

Wenn die Aufnahmeelemente 1, 2 aus Metall (z. B. Stahl) bestehen, weisen sie gemäß Figur 6 vorzugsweise einen U-förmigen Querschnitt auf und sind als Stanzbiegeteile ausgebildet. Sie weisen also einen Mittelbereich 1' und zwei Außenbereiche 1" auf. Die Außenbereiche 1" sind relativ zum Mittelbereich 1' im Wesentlichen rechtwinkelig abgebogen.

Sowohl bei der Ausbildung der Aufnahmeelemente 1, 2 als Holz- oder Kunststoffteile gemäß Figur 5 als auch bei Ausbildung als Metallteile gemäß Figur 6 weisen die Aufnahmeelemente 1, 2 eine Breite b auf, die zwischen 40 und 80 mm, insbesondere zwischen 45 und 60 mm, z. B. bei 50 mm, liegt. Auch weisen die Aufnahmeelemente 1, 2 in beiden Fällen eine Elementhöhe h' auf, die zwischen 10 und 30 mm liegt. Vorzugsweise liegt sie zwischen 15 und 25 mm, z. B. bei 18 mm.

In Erstreckungsrichtung x gesehen weisen die Aufnahmen 5 eine Aufnahmenweite w auf, die in etwa der Hälfte des Rastermaßes R entspricht. Die Aufnahmenweite w sollte also zwischen 40 und 60 %, insbesondere zwischen 45 und 55 %, des Rastermaßes R liegen, z. B. bei 50 %. In ähnlicher Weise sollten sie auch eine Aufnahmentiefe t' aufweisen, die zwischen 75 und 150 % der Aufnahmenweite w liegt, z. B. zwischen 80 und 120 % der Aufnahmenweite w. Insbesondere kann die Aufnahmentiefe t' gleich der Aufnahmenweite w sein.

Wie besonders deutlich aus Figur 7 ersichtlich ist, bestehen die Unterteilungen 6 aus einem Außenteil 10 und einem Innenteil 11. Das Außenteil 10 und das Innenteil 11 sind in einer gemeinsamen Ebene angeordnet. Das Außenteil 10 übergreift das Innenteil 11.

Das Außenteil 10 ist C-förmig ausgebildet. Es weist also im wesentlichen ein Mittelelement 12, zwei Zwischenelemente 13 und zwei Randelemente 14 auf. Zwischen den Zwischenelementen 13 und dem Mittelelement 12 einerseits und den Zwischenelementen 13 und den Randelementen 14 andererseits verlaufen abgerundete Eckbereiche 15.

Das Innenteil 11 ist U-förmig ausgebildet. Es weist also im wesentlichen ein Innenelement 16 und zwei Außenelemente 17 auf. Zwischen dem Innenelement 16 und den Außenelementen 17 verlaufen ebenfalls abgerundete Eckbereiche 18. Ersichtlich sind die Randelemente 14 des Außenteils 10 mit den Außenelementen 17 des Innenteils 11 über weitere abgerundete Eckbereiche 19 verbunden.

Die Unterteilungen 6 sind gemäß Figur 7 symmetrisch bezüglich einer Symmetrieachse 20. Sie sind also symmetrisch ausgebildet. Ersichtlich ist dabei das Innenelement 16 von den Randelementen 14 weiter beabstandet als vom Mittelelement 12. Ferner sind ersichtlich die Außenelemente 17 von den ihnen am nächsten liegenden Zwischenelementen 13 weiter beabstandet als voneinander.

Die Unterteilungen 6 bestehen gemäß Figur 8 aus Stahl-Runddraht. Insbesondere sind sie, wie aus Figur 7 ersichtlich ist, als einstückige Drahtstücke ausgebildet, deren Stöße-vorzugsweise in der Mitte des Mittelelements 12 oder in der Mitte des Innenelements 16 - miteinander verschweißt sind.

Die Unterteilungen 6 sind in den Aufnahmeelementen 1, 2 verspannt gehalten. Dies wird durch mehrere Maßnahmen erreicht. Zum einen ist der Durchmesser des Stahl-Runddrahtes, aus dem die Unterteilungen 6 bestehen, geringfügig größer als die Aufnahmeweite w der Aufnahmen 5. Darüber hinaus weisen die Unterteilungen 6 als solche eine Gesamtbreite B auf, die geringfügig größer als der Abstand der äußeren Aufnahmeelemente 1 voneinander ist. Die Unterteilungen 6 werden also beim Einstecken in die Aufnahmen 5 geringfügig zusammengepresst.

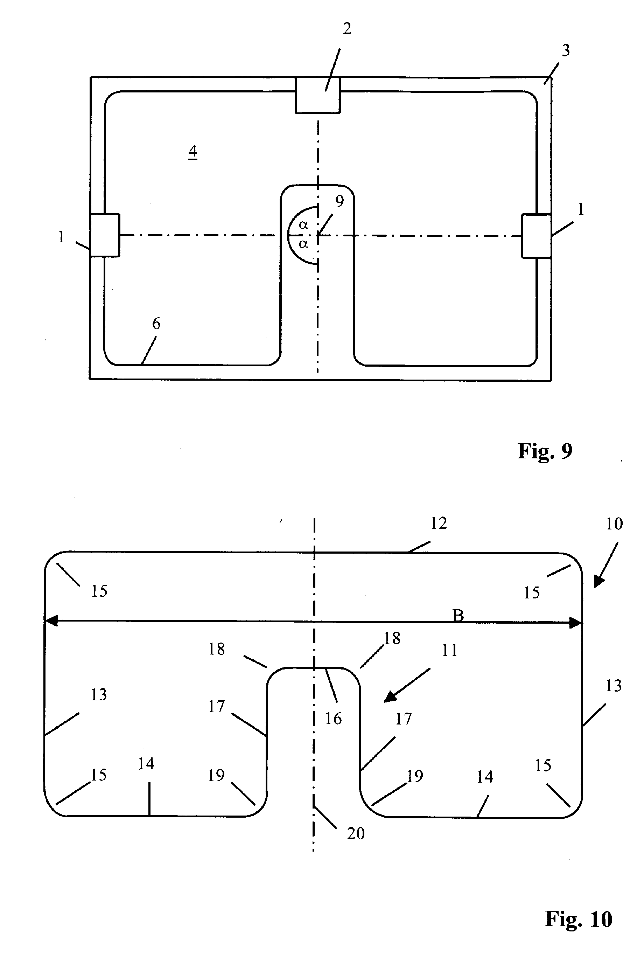

Die obenstehend beschriebene Ausführungsform ist abwandelbar. Insbesondere ist es beispielsweise gemäß den Figuren 9 und 10 auch möglich, das Regal derart auszugestalten, dass die Fachhöhe h größer als die Fachtiefe t ist, insbesondere zwischen 30 und 35 cm liegt. In diesem Fall weist das Regal in Fachhöhenrichtung z eine Höhe H über alles auf, die zwei Drittel der Länge L über alles des Regals beträgt. Auch ist das Außenelement 10 der Unterteilung 6 in diesem Fall nicht im wesentlichen quadratisch, sondern im wesentlichen rechteckig ausgebildet. Die übrigen Abmessungsverhältnisse bleiben bestehen.

Mittels des erfindungsgemäßen Regals lassen sich auf einfache Weise vereinzelt und auf engem Raum sowohl CDs als auch Doppel-CDs als auch DVD, Kassetten und dergleichen mehr aufbewahren.

### Bezugszeichenliste

- 1, 2: Aufnahmeelemente
- 1': Mittelbereich
- 1": Außenbereiche
- 3: Abschlusselemente
- 4: Aufnahmebereich
- 5: Aufnahmen
- 6: Unterteilungen
- 7: Fächer
- 8: Verbindungen
- 9: Mittelpunkt
- 10: Außenteil
- 11: Innenteil
- 12: Mittelelement
- 13: Zwischenelemente
- 14: Randelemente
- 15, 18, 19: Eckbereiche
- 16: Innenelement
- 17: Außenelemente
- 20: Symmetrieachse

- b: Breite
- B: Gesamtbreite
- h, H, h': Höhen
- L, l: Längen
- R: Rastermaß
- t, T, t': Tiefen
- w: Aufnahmenweite
- x: Erstreckungsrichtung
- y: Zugangsrichtung
- z: Fachhöhenrichtung

- α: Winkel

## Patentansprüche

1. Regal mit einer Aufnahmestruktur (1, 2) und zwei Abschlusselementen (3),
- wobei die Aufnahmestruktur (1, 2) in einer Erstreckungsrichtung (x) gesehen beidseitig mit den Abschlusselementen (3) abgeschlossen ist, so dass die Aufnahmestruktur (1, 2) und die Abschlusselemente (3) einen Aufnahmebereich (4) bilden, der aus einer Zugangsrichtung (y) zugänglich ist, die quer zur Erstreckungsrichtung (x) verläuft,
- wobei die Aufnahmestruktur (1, 2) Aufnahmen (5) aufweist, in die aus der Zugangsrichtung (y) Unterteilungen (6) einsteckbar sind, so dass die Unterteilungen (6) das Regal in Fächer (7) unterteilen, die in Erstreckungsrichtung (x) gesehen übereinander angeordnet sind,
- wobei die Aufnahmen (1, 2) in Erstreckungsrichtung (x) gesehen in einem Rastermaß (R) angeordnet sind, das zwischen 5 und 10 mm, insbesondere zwischen 6 und 8 mm, liegt,
- wobei die Fächer (7) in Zugangsrichtung (y) eine Fachtiefe (t) aufweisen, die zwischen 13,5 und 20 cm, insbesondere zwischen 14 und 15 cm, liegt,
- wobei die Fächer (7) in einer Fachhöhenrichtung (z), die sowohl quer zur Erstreckungsrichtung (x) als auch quer zur Zugangsrichtung (y) verläuft, eine Fachhöhe (h) aufweisen, die zwischen 13,5 und 35 cm, insbesondere zwischen 13,5 und 15 cm oder zwischen 30 und 35 cm, liegt.

2. Regal nach Anspruch 1,
**dadurch gekennzeichnet,**
**dass** die Aufnahmestruktur (1, 2) zwei äußere Aufnahmeelemente (1) und ein inneres Aufnahmeelement (2) aufweist und dass die äußeren Aufnahmeelemente (1) mit dem inneren Aufnahmeelement (2) bezüglich eines Mittelpunkts (9) einer Verbindungslinie der beiden äußeren Aufnahmeelemente (1) miteinander je einen Winkel (α) bilden, der zwischen 80 und 100° liegt.

3. Regal nach Anspruch 2,
**dadurch gekennzeichnet,**
**dass** es zwischen den Aufnahmeelementen (1, 2) offen ist.

4. Regal nach Anspruch 2 oder 3,
**dadurch gekennzeichnet,**
**dass** die Aufnahmeelemente (1, 2) einen U-förmigen Querschnitt aufweisende Metall-Stanzbiegeteile sind.

5. Regal nach Anspruch 2 oder 3,
**dadurch gekennzeichnet,**
**dass** die Aufnahmeelemente (1, 2) aus Holz oder Kunststoff bestehen und dass die Aufnahmen (5) als Nuten (5)ausgebildet sind.

6. Regal nach einem der obigen Ansprüche,
**dadurch gekennzeichnet,**
**dass** die Aufnahmen (5) in Erstreckungsrichtung (x) gesehen eine Aufnahmenweite (w) aufweisen, die zwischen 40 und 60 %, insbesondere zwischen 45 und 55 %, des Rastermaßes (R) liegt.

7. Regal nach einem der obigen Ansprüche,
**dadurch gekennzeichnet,**
**dass** die Unterteilungen (6) in der Aufnahmestruktur (1, 2) verspannt gehalten sind.

8. Regal nach einem der obigen Ansprüche,
**dadurch gekennzeichnet,**
**dass** es in Zugangsrichtung (y) eine Tiefe (T) über alles aufweist, die gleich einem Drittel der Länge (L) über alles ist.

9. Regal nach einem der obigen Ansprüche,
**dadurch gekennzeichnet,**
**dass** es in Fachhöhenrichtung (z) eine Höhe (H) über alles aufweist, die gleich einem Drittel oder zwei Drittel der Länge (L) über alles ist.

10. Unterteilung für ein Regal nach einem der obigen Ansprüche, mit einem Außenteil (10) und einem Innenteil (11),
- wobei das Außenteil (10) und das Innenteil (11) in einer gemeinsamen Ebene angeordnet sind,
- wobei das Außenteil (10) das Innenteil (11) übergreift,
- wobei das Außenteil (10) C-förmig ausgebildet ist, so dass es im wesentlichen ein Mittelelement (12), zwei Zwischenelemente (13) und zwei Randelemente (14) aufweist,
- wobei zwischen den Zwischenelementen (13) und dem Mittelelement (12) sowie zwischen den Zwischenelementen (13) und den Randelementen (14) abgerundete Eckbereiche (15) verlaufen,
- wobei das Innenteil (11) U-förmig ausgebildet ist, so dass es im wesentlichen ein Innenelement (16) und zwei Außenelemente (17) aufweist,
- wobei zwischen dem Innenelement (16) und den Außenelementen (17) ebenfalls abgerundete Eckbereiche (18) verlaufen,
- wobei die Randelemente (14) des Außenteils (10) mit den Außenelementen (17) des Innenteils (11) über abgerundete Eckbereiche (19) verbunden sind.

11. Unterteilung nach Anspruch 10,
**dadurch gekennzeichnet,**
**dass** das Innenelement (16) von den Randelementen (14) weiter beabstandet ist als vom Mittelelement (12).

12. Unterteilung nach Anspruch 10 oder 11,
**dadurch gekennzeichnet,**
**dass** die Außenelemente (17) von den ihnen am nächsten liegenden Zwischenelementen (13) weiter beabstandet sind als voneinander.

13. Unterteilung nach Anspruch 10, 11 oder 12,
**dadurch gekennzeichnet,**
**dass** sie als einstückiges Drahtstück ausgebildet ist, dessen Stöße miteinander verschweißt sind.

14. Aus Metall, insbesondere aus Stahl, bestehendes, als Stanzbiegeteil ausgebildetes, sich in einer Erstreckungsrichtung (x) erstreckendes Aufnahmeelement für ein Regal nach einem der Ansprüche 1 bis 14,
- wobei das Aufnahmeelement im Querschnitt zur Erstreckungsrichtung (x) einen Mittelbereich (1') und zwei Aussenbereiche (1") aufweist,
- wobei die Aussenbereiche (1") relativ zum Mittelbereich (1') im Wesentlichen rechtwinkelig abgebogen sind, so dass das Aufnahmeelement im Querschnitt U-förmig ausgebildet ist,
- wobei die Aussenbereiche (1") um eine Elementbreite (b) voneinander beabstandet sind, die zwischen 40 und 80 mm, insbesondere zwischen 45 und 60 mm, z. B. bei 50 mm, liegt,
- wobei die Aussenbereiche (1") an ihren vom Mittelbereich (1') beabstandeten Enden Aufnahmen (5) aufweisen, die in Erstreckungsrichtung (x) gesehen in einem Rastermaß (R) angeordnet sind, das zwischen 5 und 10 mm, insbesondere zwischen 6 und 8 mm, z. B. bei 7 mm, liegt,
- wobei die Aufnahmen (5) eine Aufnahmenweite (w) aufweisen, die zwischen 40 und 60 %, insbesondere zwischen 45 und 55 %, z. B. bei 50 %, des Rastermaßes (R) liegt.

15. Aufnahmeelement nach Anspruch 14,
**dadurch gekennzeichnet,**
**dass** die Aufnahmen (5) quer zur Elementbreite (b) und quer zur Erstreckungsrichtung (x) eine Aufnahmentiefe (t') aufweisen, die zwischen 75 und 150 %, insbesondere zwischen 80 und 120 %, z. B. bei 100 %, der Aufnahmenweite (w) liegt.
